(19) Europäisches Patentamt
European Patent Office
Office européen des brevets

(11) EP 0 773 261 B1

(12) EUROPÄISCHE PATENTSCHRIFT

(45) Veröffentlichungstag und Bekanntmachung des Hinweises auf die Patenterteilung:
**28.01.1998 Patentblatt 1998/05**

(51) Int Cl.6: **C08L 83/04**, C09D 183/04, C08K 5/05, C08K 5/01

(21) Anmeldenummer: **96117829.0**

(22) Anmeldetag: **07.11.1996**

# (54) Vernetzbare Zusammensetzungen

Crosslinkable compositions

Compositions durcissables

(84) Benannte Vertragsstaaten:
**AT BE CH DE ES FI FR GB IT LI LU NL**

(30) Priorität: **07.11.1995 DE 19541451**

(43) Veröffentlichungstag der Anmeldung:
**14.05.1997 Patentblatt 1997/20**

(73) Patentinhaber: **Wacker-Chemie GmbH**
**81737 München (DE)**

(72) Erfinder:
- **Dauth, Jochen, Dr.**
  **84489 Burghausen (DE)**
- **Herzig, Christian, Dr.**
  **83329 Feichten-Waging (DE)**
- **Deubzer, Bernward, Dr.**
  **84489 Burghausen (DE)**
- **Schnitzer, Klaus**
  **84387 Julbach (DE)**
- **Huettner, David, Dr.**
  **Tecumseh, MI 49286 (US)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:
**EP-A- 0 094 185**
**EP-A- 0 154 411**
**EP-A- 0 622 420**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 773 261 B1

Printed by Jouve, 75001 PARIS (FR)

## Beschreibung

Die Erfindung betrifft vernetzbare Zusammensetzungen enthaltend

(1) Organosiliciumverbindungen, die Reste mit aliphatischen Kohlenstoff-Kohlenstoff-Mehrfachbindungen aufweisen,
(2) Organosiliciumverbindungen mit Si-gebundenen Wasserstoffatomen oder anstelle von (1) und (2)
(3) Organosiliciumverbindungen, die Reste mit aliphatischen Kohlenstoff-Kohlenstoff-Mehrfachbindungen und Si-gebundene Wasserstoffatome aufweisen,
(4) die Anlagerung von Si-gebundenen Wasserstoff an aliphatische Mehrfachbindung fördernde Katalysatoren und
(5) die Anlagerung von Si-gebundenem Wasserstoff an aliphatische Mehrfachbindung bei Raumtemperatur verzögernde Mittel.

Organopolysiloxanzusammensetzungen, welche durch Reaktion von SiH-Gruppen mit Si-gebundenen olefinischen Gruppen in Gegenwart eines Hydrosilylierungskatalysators härtbar sind, sind beispielsweise aus US-A 2,813,218, US-A 3,249,581 und US-A 3,436,366 bekannt.

Unter dem Begriff Hydrosilylierungskatalysatoren sind dabei die Anlagerung von Si-gebundenen Wasserstoff an aliphatische Mehrfachbindung fördernde Katalysatoren zu verstehen.

Weil das Vernetzen beim Mischen der vorerwähnten Bestandteile (1), (2) bzw. (3) und (4) beginnt, ist es übliche Praxis, additionsvernetzende Organopolysiloxanzusammensetzungen in zwei Komponenten bereitzustellen, von denen die eine das olefinisch ungesättigte Organopolysiloxan und den Hydrosilylierungskatalysator und die andere das Organohydrogenpolysiloxan-Vernetzungsmittel enthält.

Wenn es notwendig ist, die Topfzeit von additionsvernetzenden Organopolysiloxanzusammensetzungen zu verlängern oder eine Einkomponenten-additionsvernetzende Organopolysiloxanzusammensetzung bereitzustellen, kann ein Inhibitor darin enthalten sein.

Unter dem Begriff Inhibitoren sind dabei im Rahmen dieser Erfindung die Anlagerung von Si-gebundenem Wasserstoff an aliphatische Mehrfachbindung bei Raumtemperatur verzögernde Mittel zu verstehen, d.h. Inhibitoren sind Verbindungen, welche additionsvernetzende Organopolysiloxanzusammensetzungen bei Raumtemperatur langsam vernetzen, jedoch das Vernetzen bei erhöhten Temperaturen nicht verzögern.

Derartige Inhibitoren sind durch Hitze deaktivierbare Inhibitoren, oder sie sind ausreichend flüchtig, um aus den Organopolysiloxanzusammensetzungen bei erhöhter Temperatur ausgetrieben zu werden.

In der GB-A 1,141,868 (veröffentlicht am 5. Februar 1969, Dow Corning Corporation) sind als Inhibitoren organische Verbindungen mit mindestens einer -C≡C-Gruppe, beschrieben. Die Verbindungen zeichnen sich durch ihre hohe Flüchtigkeit und dadurch bedingt durch eine geringe Topfzeit bei leicht erhöhten Temperaturen aus.

Gemäß EP-A 622 420 (offengelegt am 2. November 1994, Rhone-Poulenc Chimie) sind als Inhibitoren Alkinole der allgemeinen Formel R-(R')C(OH)-C≡CH mit langen Alkyl- oder Phenylresten beschrieben, die sich durch ihre geringe Flüchtigkeit und dadurch bedingt durch eine ausreichende Topfzeit bei leicht erhöhten Temperaturen auszeichnen.

Aus Chemical Abstracts 113, 61033m (H. Jasuaki, Nippon Kagaku Kaishi 5, (1990), 541) ist bekannt, daß Alkinole effektive Inhibitoren sind.

In US-A 4,603,215 (ausgegeben 29. Juli 1986, Dow Corning Corporation) sind isolierbare Platin-Alkyn-Komplexe beschrieben, die durch Umsetzung von Platin-Vorstufen mit Alkinen der allgemeinen Formel R'-C≡C-R' dargestellt werden und für Hydrosilylierungs-, Hydrierungs-, Isomerisierungs- und Oligomerisierungsreaktionen verwendet werden können.

Aus US 4,559,396 (ausgegeben 29. April 1983, Toray Silicone Company, Ltd.) sind ungesättigte, organische Verbindungen, die eine Dreifachbindung in Konjugation mit einer Doppelbindung aufweisen, bekannt.
Diese Verbindungen zeichnen sich durch ihre hohe Flüchtigkeit aus und gewährleisten eine gute Härtung der additionsvernetzenden Organopolysiloxanzusammensetzungen bei niedrigen Temperaturen.

Es bestand nun die Aufgabe, Inhibitoren bereitzustellen, die nur eine geringe Flüchtigkeit aufweisen, die eine gute Topfzeit und damit eine ausreichend lange Verzögerung der Vernetzung der additionsvernetzenden Zusammensetzungen auf der Grundlage von Organosiliciumverbindungen bei Raumtemperatur gewährleisten, die aber bei höheren Temperaturen eine vollständige Vernetzung der additionsvernetzenden Zusammensetzungen auf der Grundlage von Organosiliciumverbindungen erlauben, d.h. keine Verschlechterung der Vernetzungsgeschwindigkeit bei höheren Temperaturen bewirken, die auch in höheren Konzentrationen gut in den additionsvernetzenden Zusammensetzungen auf der Grundlage von Organosiliciumverbindungen einmischbar sein und die kein Gefährdungspotential bezüglich Toxizität und Handhabung besitzen. Die Aufgabe wird durch die Erfindung gelöst.

Gegenstand der Erfindung sind vernetzbare Zusammensetzungen enthaltend

(1) Organosiliciumverbindungen, die Reste mit aliphatischen Kohlenstoff-Kohlenstoff-Mehrfachbindungen aufweisen,
(2) Organosiliciumverbindungen mit Si-gebundenen Wasserstoffatomen oder anstelle von (1) und (2)
(3) Organosiliciumverbindungen, die Reste mit aliphatischen Kohlenstoff-Kohlenstoff-Mehrfachbindungen und Si-gebundene Wasserstoffatome aufweisen,
(4) die Anlagerung von Si-gebundenen Wasserstoff an aliphatische Mehrfachbindung fördernde Katalysatoren und
(5) die Anlagerung von Si-gebundenem Wasserstoff an aliphatische Mehrfachbindung bei Raumtemperatur verzögernde Mittel der allgemeinen Formel

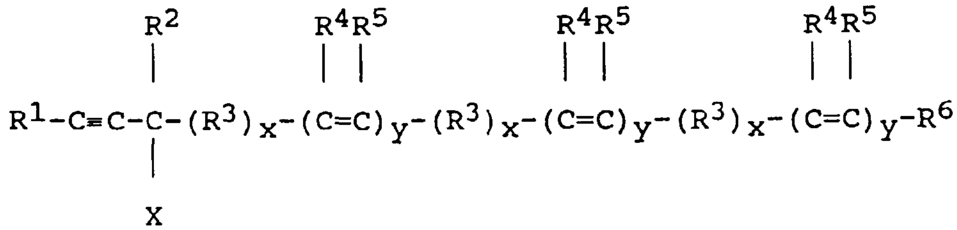
(I)

wobei

$R^1$, $R^2$, $R^4$, $R^5$ und $R^6$ gleich oder verschieden sind, ein Wasserstoffatom oder einen einwertigen, gegebenenfalls substituierten Kohlenwasserstoffrest mit 1 bis 12 Kohlenstoffatomen je Rest bedeutet,
$R^3$ einen zweiwertigen Kohlenwasserstoffrest mit 1 bis 6 Kohlenstoffatomen je Rest bedeutet,
X einen Rest der Formel -OH, -Cl, Br und -CN bedeutet und
x und y gleich oder verschieden sind und 0 oder 1 bedeutet, mit der Maßgabe, daß mindestens eine Doppelbindung vorliegt.

Beispiele für Reste $R^1$, $R^2$, $R^4$, $R^5$ und $R^6$ sind Alkylreste, wie der Methyl-, Ethyl-, n-Propyl-, iso-Propyl-, 1-n-Butyl-, 2-n-Butyl-,iso-Butyl-, tert.-Butyl-, n-Pentyl-, iso-Pentyl-, neo-Pentyl-,tert. Pentylrest; Hexylreste, wie der n-Hexylrest; Heptylreste, wie der n-Heptylrest; Octylreste, wie der n-Octylrest und iso-Octylreste, wie der 2,2,4-Trimethyl-pentylrest; Nonylreste, wie der n-Nonylrest; Decylreste, wie der n-Decylrest; Dodecylreste,wie der n-Dodecylrest; Cycloalkylreste, wie der Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Bevorzugt Beispiele für die Reste $R^1$, $R^2$, $R^4$, $R^5$ und $R^6$ sind ein Wasserstoffatom und der Methylrest.

Beispiele für halogenierte Reste $R^1$, $R^2$, $R^4$, $R^5$ und $R^6$ sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorophenylrest.

Der Rest $R^3$ ist vorzugsweise ein linearer oder verzweigter Alkylrest mit 1 bis 6 Kohlenstoffatomen je Rest. Beispiele für Reste $R^3$, wenn x gleich 1 ist, sind Alkylreste der Formel $-CH_2-$, $-CH(CH_3)-$, $-C(CH_3)(C_2H_5)-$, $-(CH_2)_2-$, $-(CH_2)_3-$, $-(CH_2)_2-CH(CH_3)-$ und $-(CH_2)_4-$, wobei der Rest der Formel $-CH_2-CH_2-$ bevorzugt ist.

Ein bevorzugter Rest X ist ein Rest der Formel -OH.

Vorzugsweise enthält der erfindungsgemäße Inhibitor (5) insgesamt 6 bis 15 Kohlenstoffatome, bevorzugt 8 bis 15 Kohlenstoffatome, besonders bevorzugt 10 Kohlenstoffatome.

Bevorzugt als erfindungsgemäße Inhibitoren (5) sind Verbindungen der Formel

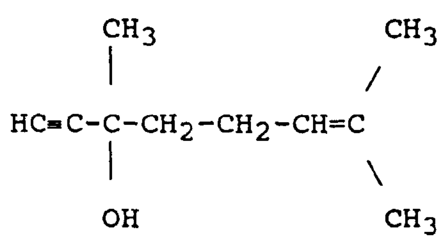

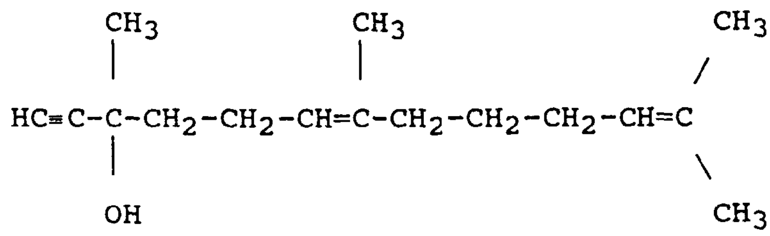

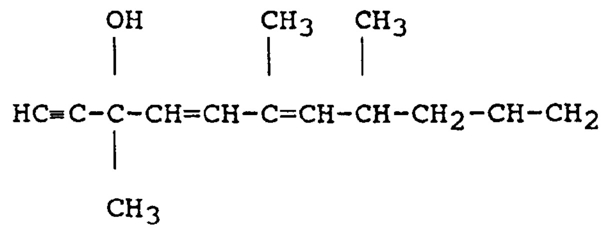

wobei die erstgenannte Verbindung besonders bevorzugt ist.

Die erstgenannte Verbindung ist unter dem Handelsnamen "Dehydrolinalool" bei der Fa. BASF käuflich erwerblich. Die Herstellung der erfindungsgemäßen Inhibitoren (5) erfolgt über die Acetylierung der korrespondierenden Ketone.

Die erfindungsgemäßen Inhibitoren der allgemeinen Formel (I) werden vorzugsweise in Mengen von 0,1 Gew.-% bis 3,0 Gew.-%, bevorzugt in Mengen von 0,3 Gew.-% bis 1,5 Gew.-%, bezogen auf das Gesamtgewicht der Organosiliciumverbindungen (1) und (2) bzw. auf das Gesamtgewicht der Organosiliciumverbindung (3), eingesetzt.

Die erfindungsgemäßen Inhibitoren können mit den Organosiliciumverbindungen (1), (2) oder (3) bzw. mit der Katalysatorkomponente (4) im vorab gemischt werden.

Vorzugsweise werden die erfindungsgemäßen Zusammensetzungen mit den Bestandteilen (1), (2) bzw. (3), (4) und (5) in Form von Zweikomponenten-Massen bereitgestellt, wobei die Bestandteile (2) bzw. (3) und (4) von einander getrennt werden.

Die Inhibitoren der Formel (I) können in allen vernetzbaren Zusammensetzungen verwendet werden, in denen auch bisher Inhibitoren verwendet werden konnten, die die Anlagerung von Si-gebundenem Wasserstoff an aliphatische Mehrfachbindung bei Raumtemperatur verzögern.

Als Organosiliciumverbindungen (1), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel

$$R^7_aR^8_bSiO_{\frac{4-a-b}{2}} \qquad (II)$$

wobei $R^7$ einen einwertigen von aliphatischen Kohlenstoff-Kohlenstoff-Mehrfachbindungen freien Kohlenwasserstoffrest mit 1 bis 18 Kohlenstoffatomen je Rest und
$R^8$ einen einwertigen Kohlenwasserstoffrest mit mindestens einer terminalen aliphatischen Kohlenstoff-Kohlenstoff-Mehrfachbindung mit 2 bis 12 Kohlenstoffatomen je Rest bedeutet,
a 0, 1, 2 oder 3,
b 0, 1 oder 2
und die Summe a+b 0, 1, 2 oder 3 ist,

mit der Maßgabe, daß durchschnittlich mindestens 1 Rest $R^8$ je Molekül, bevorzugt mindestens 2 Reste $R^8$ je Molekül vorliegen, verwendet.

Bevorzugt als Organosiliciumverbindungen (1) sind Organopolysiloxane der allgemeinen Formel

$$R^8_gR^7_{3-g}SiO(SiR^7_2O)_n(SiR^7R^8O)_mSiR^7_{3-g}R^8_g \qquad (III)$$

wobei

$R^7$ und $R^8$ die oben dafür angegebene Bedeutung haben,
g 0, 1 oder 2,
n 0 oder eine ganze Zahl von 1 bis 1500 und
m 0 oder eine ganze Zahl von 1 bis 200 ist,

mit der Maßgabe, daß mindestens ein Rest $R^8$ je Molekül, insbesondere mindestens 2 Reste $R^8$ je Molekül, enthalten sind.

Im Rahmen dieser Erfindung soll Formel (III) so verstanden werden, daß n Einheiten $-(SiR^7_2O)-$ und m Einheiten $-(SiR^7R^8O)-$ in beliebiger Weise im Organopolysiloxanmolekül verteilt sein können.

Als Organosiliciumverbindungen (1) können auch Siloxancopolymere, wie sie in US-A 5,241,034 beschrieben sind und die aus Siloxanblöcken und Kohlenwasserstoffblöcken bestehen, verwendet werden.

Die Organosiliciumverbindungen (1) besitzen vorzugsweise eine durchschnittliche Viskosität von 100 bis 100 000 mPa·s bei 25°C, bevorzugt 100 bis 10 000 mPa·s bei 25°C, besonders bevorzugt 100 bis 500 mPa.s bei 25°C.

Beispiele für Kohlenwasserstoffreste $R^7$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Beispiele für Reste $R^8$ sind Alkenylreste, wie der Vinyl-, 5-Hexenyl-, 2,4-Divinylcyclohexylethyl-, 3,4-Divinylcyclohexylethyl-, 2-Propenyl-, Allyl-, 3-Butenyl- und 4-Pentenylrest; und Alkinylreste, wie der Ethinyl-, Propargyl- und 2-Propinylrest.

Als Organosiliciumverbindungen (2), die Si-gebundene Wasserstoffatome aufweisen, werden vorzugsweise lineare, cyclische oder verzweigte Organopolysiloxane aus Einheiten der allgemeinen Formel

$$R^7_eH_fSiO_{\frac{4-e-f}{2}} \qquad (IV)$$

wobei

$R^7$ die oben dafür angegebene Bedeutung hat,
e 0, 1, 2 oder 3,
f 0, 1 oder 2
und die Summe von e+f 0, 1, 2 oder 3 ist,

mit der Maßgabe, daß durchschnittlich mindestens 1 Si-gebundenes Wasserstoffatom je Molekül, bevorzugt mindestens 2 Si-gebundene Wasserstoffatome je Molekül, vorliegen, verwendet.

Bevorzugt werden als Organosiliciumverbindungen (2) Organopolysiloxane der allgemeinen Formel

$$H_hR^7_{3-h}SiO\,(SiR^7_2O)_o(SiR^7HO)_pSiR^7_{3-h}H_h \qquad (V)$$

wobei

R die oben dafür angegebene Bedeutung hat,
h 0, 1 oder 2,
o 0 oder eine ganze Zahl von 1 bis 1500 und
p 0 oder eine ganze Zahl von 1 bis 200 ist,

mit der Maßgabe, daß mindestens 1 Si-gebundenes Wasserstoffatom je Molekül, insbesondere mindestens 2 Si-gebundene Wasserstoffatome je Molekül, vorliegen, verwendet.

Im Rahmen dieser Erfindung soll Formel (V) so verstanden werden, daß o Einheiten $-(SiR^7_2O)-$ und p Einheiten $-(SiR^7HO)-$ in beliebiger Weise im Organopolysiloxanmolekül verteilt sein können.

Die Organosiliciumverbindungen (2) enthalten vorzugsweise mindestens 0,4 Gew.-%, bevorzugt 0,8 bis 1,7 Gew.-% Si-gebundenen Wasserstoff. Die Organosiliciumverbindungen (2) besitzen vorzugsweise eine durchschnittliche Viskosität von 10 bis 1 000 mPa·s bei 25°C, bevorzugt von 10 bis 100 mPa·s bei 25°C.

Organosiliciumverbindung (2) wird vorzugsweise in Mengen von 0,8 bis 3,0, bevorzugt 1,5 bis 2,5 Grammatom Si-gebundenen Wasserstoff je Mol Si-gebundenen Restes mit aliphatischer Kohlenstoff-Kohlenstoff-Mehrfachbindung in der Organosiliciumverbindung (1) eingesetzt.

Als Organosiliciumverbindungen (3), die aliphatische Kohlenstoff-Kohlenstoff-Mehrfachbindungen und Si-gebundene Wasserstoffatome aufweisen und anstelle von Organosiliciumverbindungen (1) und (2) verwendet werden können, werden vorzugsweise solche aus Einheiten der Formel

$$R^7_k SiO_{\frac{4-k}{2}} \qquad (VI),$$

$$R^7_l R^8 SiO_{\frac{3-l}{2}} \qquad (VII)$$

und

$$R^7_q HSiO_{\frac{3-q}{2}} \qquad (VIII),$$

wobei

$R^7$ und $R^8$ die oben dafür angegebene Bedeutung haben,
k 0, 1, 2 oder 3,
l 0, 1 oder 2,
q 0, 1 oder 2, ist

mit der Maßgabe, daß je Molekül durchschnittlich mindestens 1 Rest $R^8$, bevorzugt mindestens 2 Reste $R^8$ und durchschnittlich mindestens 1 Si-gebundenes Wasserstoffatom, bevorzugt mindestens 2 Si-gebundene Wasserstoffatome vorliegen, verwendet.

Beispiele für Organosiliciumverbindungen (3) sind Organopolysiloxane aus $SiO_{4/2}$-, $R^7_3SiO_{1/2}$-, $R^7_2R^8SiO_{1/2}$- und $R^7_2HSiO_{1/2}$-Einheiten, sogenannte MQ-Harze, wobei diese Harze T-Einheiten ($R^7SiO_{3/2}$) und D-Einheiten ($R^7_2SiO$) enthalten können.

Die Organosiliciumverbindungen (3) besitzen vorzugsweise eine durchschnittliche Viskosität von 100 bis 100 000 mPa·s bei 25°C bzw. sind Feststoffe mit Molekulargewichten von 5 000 bis 50 000 g/mol.

Als die Anlagerung von Si-gebundenem Wasserstoff an aliphatische Mehrfachbindungen fördernde Katalysatoren können auch bei den erfindungsgemäßen Zusammensetzungen die gleichen Katalysatoren eingesetzt werden, die auch bisher zur Förderung der Anlagerung von Si-gebundenem Wasserstoff an aliphatische Mehrfachbindung eingesetzt werden konnten.

Bei den Katalysatoren handelt es sich vorzugsweise um ein Metall aus der Gruppe der Platinmetalle, wie Platin, Palladium oder Rhodium oder um eine Verbindung oder einen Komplex aus der Gruppe Platinmetalle, wie Platin, Palladium oder Rhodium, bevorzugt um eine Verbindung oder einen Komplex des Platins.

Beispiele für solche Katalysatoren sind metallisches und feinverteiltes Platin, das sich auf Trägern wie Siliciumdioxyd, Aluminiumoxyd oder Aktivkohle befinden kann, Verbindungen oder Komplexe von Platin, wie Platinhalogenide, z. B. $PtCl_4$, $H_2PtCl_6{*}6H_2O$, $Na_2PtCl_4{*}4H_2O$, Platin-Olefin-Komplexe, Platin-Alkohol-Komplexe, Platin-Keton-Komplexe, Platin-Ether-Komplexe, Platin-Aldehyd-Komplexe, einschließlich Umsetzungsprodukten aus $H_2PtCl_6{*}6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbaren anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gammapicolin-Platindichlorid, Cyclopentadien-Platinchlorid sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Die Katalysatoren (4) werden vorzugsweise in Mengen von 5 bis 300 Gew.-ppm (Gewichtsteilen je Million Gewichtsteilen), bevorzugt 20 bis 200 Gew.-ppm, jeweils berechnet als elementares Platinmetall und bezogen auf das Gesamtgewicht der Organosiliciumverbindungen (1) und (2) bzw. auf das Gesamtgewicht der Organosiliciumverbindung (3), eingesetzt.

Die erfindungsgemäßen Zusammensetzungen werden vorzugsweise beim Druck der umgebenden Atmosphäre, also etwa bei 1020 hPa (abs.) gehärtet, sie können aber auch bei höheren oder niedrigeren Drücken gehärtet werden.

Die Vernetzung der erfindungsgemäßen Zusammensetzungen erfolgt vorzugsweise bei einer Temperatur von 50 °C bis 200 °C, bevorzugt 70 °C bis 150 °C. Als Energiequellen für die Vernetzung durch Erwärmen werden vorzugsweise Öfen, z.B. Umlufttrockenschränke, Heizkanäle, beheizte Walzen, beheizte Platten oder Wärmestrahlen des Infrarotbereiches verwendet.

Die erfindungsgemäßen Zusammensetzungen können, obwohl nicht bevorzugt, außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Bei den erfindungsgemäßen Zusammensetzungen können inerte, organische Lösungsmittel mitverwendet werden, obwohl die Mitverwendung von inerten, organischen Lösungsmitteln nicht bevorzugt ist.

Beispiele für inerte, organische Lösungsmittel sind Toluol, Xylol, Isophoron, Octanisomere, Butylacetat und Isopropanol.

Die erfindungsgemäßen Zusammensetzungen können im besonderen zur Herstellung von klebrige Stoffe abweisenden Überzüge, in den Bereichen Elektronik, Beschichtungen und Flüssigkautschuk Anwendung finden.

Gegenstand der Erfindung ist weiterhin ein Verfahren zur Herstellung von klebrige Stoffe abweisenden Überzügen durch Auftragen von vernetzbaren Zusammensetzungen enthaltend

(1) Organosiliciumverbindungen, die Reste mit aliphatischen Kohlenstoff-Kohlenstoff-Mehrfachbindungen aufweisen,
(2) Organosiliciumverbindungen mit Si-gebundenen Wasserstoffatomen oder anstelle von (1) und (2)
(3) Organosiliciumverbindungen, die Reste mit aliphatischen Kohlenstoff-Kohlenstoff-Mehrfachbindungen und Si-gebundene Wasserstoffatome aufweisen,
(4) die Anlagerung von Si-gebundenen Wasserstoff an aliphatische Mehrfachbindung fördernde Katalysatoren und
(5) die Anlagerung von Si-gebundenem Wasserstoff an aliphatische Mehrfachbindung bei Raumtemperatur verzögernde Mittel der allgemeinen Formel

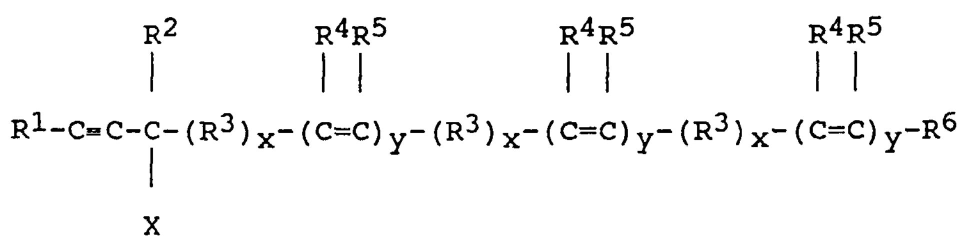

(I)

wobei

$R^1$, $R^2$, $R^4$, $R^5$ und $R^6$ gleich oder verschieden sind, ein Wasserstoffatom oder einen einwertigen, gegebenenfalls substituierten Kohlenwasserstoffrest mit 1 bis 12 Kohlenstoffatomen je Rest bedeutet,
$R^3$ einen zweiwertigen Kohlenwasserstoffrest mit 1 bis 6 Kohlenstoffatomen je Rest bedeutet,
X einen Rest der Formel -OH, -Cl, Br und -CN bedeutet und
x und y gleich oder verschieden sind und 0 oder 1 bedeutet, mit der Maßgabe, daß mindestens eine Doppelbindung vorliegt,

auf die klebrige Stoffe abweisend zu machenden Oberflächen und anschließende Härtung der Zusammensetzungen.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste. Insbesondere eignet sich für die Auftragung ein Mehrwalzensystem (4-5 Walzen), wie Gummi-Stahl-Gummi usw., bei dem der Film so oft geteilt wird, daß zum Schluß ein Auftrag von 0,6 bis 1,2 µm erhalten wird.

Bei den klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelndem Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunststoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren. Beim off-line Verfahren wird die Siliconzusammensetzung auf das Papier aufgetragen und vernetzt, dann in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt. Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen. Das off-line Verfahren und das in-line Verfahren kann mit den erfindungsgemäßen Zusammensetzungen bei einer Geschwindigkeit von 50 bis 500 m/min, bevorzugt 100 bis 300 m/min, betrieben werden.

Beispiel 1:

Topfzeitverhalten einer additionsvernetzenden Organopolysiloxanzusammensetzung mit einem Inhibitor der Formel

$$HC{\equiv}C\text{-}C(CH_3)(OH)\text{-}CH_2\text{-}CH_2\text{-}CH{=}C(CH_3)_2$$

käuflich erwerblich unter dem Handelsnamen "Dehydrolinalool" bei der Fa. BASF bei verschiedenen Temperaturen und molaren Verhältnissen zu Platin:

234 mg (1,537 x $10^{-3}$ mol) Dehydrolinalool werden zu 100 g α,ω-Divinyldimethylpolysiloxan mit einer Viskosität von 500 mPa·s bei 25 °C gegeben. Zur Reaktionsmischung werden dann 3,0 g eines Mischpolymerisates aus Trimethylsiloxan-, Dimethylsiloxan- und Methylhydrogensiloxaneinheiten mit einer Viskosität von 35 mPa·s bei 25 °C, das 1,15 Gew.-% Si-gebundenen Wasserstoff enthält, gegeben. Schließlich wird der Platinkatalysator, in Form eines Platindivinyltetramethyldisiloxankomplexes (Herstellung gemäß Angew. Chem. 1991, 103, S. 439) zudosiert, so daß die Gesamtmischung 100 ppm Platin (bezogen auf reines Metall) enthält. Das molare Verhältnis von Inhibitor zu Platin ist 30 zu 1.

Für die molaren Verhältnisse 40 bzw. 60 zu 1 wurden 312 mg ($2{,}05 \times 10^{-3}$ mol) bzw. 468 mg ($3{,}075 \times 10^{-3}$ mol) Dehydrolinalool zu 100 g des oben beschriebenen $\alpha,\omega$-Divinyldimethylpolysiloxan zugegeben.

Tabelle 1 gibt die Gelzeiten der drei Mischungen bei verschiedenen Temperaturen an, wobei ein Gel-Timer der Fa. Bachofer zur Bestimmung diente.

Tabelle 1

| Ansatz | 25°C | 60°C | 80°C | 100°C |
|---|---|---|---|---|
| 30/1 | 125 h | 0,88 h | 0,15 h | 0,06 h |
| 40/1 | 179 h | 3,2 h | 0,42 h | 0,09 h |
| 60/1 | 492 h | 7,9 h | 0,92 h | 0,13 h |

Vergleichsversuch 1:

Vergleichsversuch zu Beispiel 1 mit 3,5-Dimethyl-1-hexin-3-ol, käuflich erwerblich bei der Fa. Aldrich als Inhibitor gemäß GB-A 1,141,868:

Die Arbeitsweise von Beispiel 1 wurde wiederholt mit der Abänderung, daß statt Dehydrolinalool 3,5-Dimethyl-1-hexin-3-ol verwendet wurde. Zur Einstellung der molaren Verhältnisse 30/1, 40/1 und 60/1 von Inhibitor zu Platin wurden 194 mg, 259 mg und 388 mg 3,5-Dimethyl-1-hexin-3-ol eingewogen. Tabelle 2 zeigt die Gelzeiten der drei Mischungen unter analogen Bedingungen.

Tabelle 2

| Ansatz | 25°C | 60°C | 80°C | 100°C |
|---|---|---|---|---|
| 30/1 | 143 h | 1,22 h | 0,15 h | 0,04 h |
| 40/1 | 187 h | 1,92 h | 0,28 h | 0,07 h |
| 60/1 | 287 h | 6,0 h | 0,75 h | 0,19 h |

Im Vergleich zu Dehydrolinalool zeigt das 3,5-Dimethyl-1-hexin-3-ol bei höheren Gehalten deutlich niedrigere Werte für die Gelzeiten, wobei sich bei höheren Temperaturen die Werte angleichen. Bei niedrigen Inhibitorgehalten sind die Gelzeitunterschiede nur marginal.

Vergleichsversuch 2:

Vergleichsversuch zu Beispiel 1 mit 3,5-Dimethyl-3-hexen-1-in, herstellbar durch Dehydratisierung von 3,5-Dimethyl-1-hexin-3-ol mit p-Toluolsulfonsäure als Inhibitor gemäß US-A 4,559,396:

Die Arbeitsweise von Beispiel 1 wurde wiederholt mit der Abänderung, daß statt Dehydrolinalool 3,5-Dimethyl-3-hexen-1-in verwendet wurde. Zur Einstellung der molaren Verhältnisse 30/1, 40/1 und 60/1 von Inhibitor zu Platin wurden 162 mg, 222 mg und 333 mg 3,5-Dimethyl-3-hexen-1-in eingewogen. Tabelle 3 zeigt die Gelzeiten der drei Mischungen unter analogen Bedingungen.

Tabelle 3

| Ansatz | 25°C | 60°C | 80°C | 100°C |
|---|---|---|---|---|
| 30/1 | 2,1 h | 0,07 h | 0,02 h | 0,02 h |
| 40/1 | 3,5 h | 0,12 h | 0,03 h | 0,02 h |
| 60/1 | 13,5 h | 0,37 h | 0,08 h | 0,03 h |

Im Vergleich zu Dehydrolinalool und auch zu 3,5-Dimethyl-1-hexin-3-ol zeigt das 3,5-Dimethyl-3-hexen-1-in bei allen vergleichbaren Gehalten extrem niedrige Werte für die Gelzeiten und damit eine schwach inhibierende Wirkung.

Beispiel 2:

Dünnschichttopfzeiten der in Beispiel 1 beschriebenen Mischungen mit Inhibitor/Platin-Verhältnissen von 40 und 60 zu 1 bei 25 °C:

Dazu wurden beide Mischungen jeweils mit einem Glasstab in einer Schichtdicke von ca. 3 - 5 mm auf ein Polyethylen beschichtetes Papier der Fa. PWA - Raubling aufgetragen und in einem Umluftofen bei 25 °C temperiert. Die

Dünnschichttopfzeit wurde mittels einem Strichtest bestimmt, d.h. die Zeit wurde gestoppt, als die Schicht nicht mehr klebrig war. Die Ergebnisse sind in Tabelle 4 zusammengefaßt.

Tabelle 4

| Ansatz | Dünnschichttopfzeit in Minuten |
|---|---|
| 40/1 | 112 |
| 60/1 | 190 |

Vergleichsversuch 3:

Vergleichsversuch zu Beispiel 2 mit Mischungen aus Vergleichsversuch 1:

Die Arbeitsweise von Beispiel 2 wurde wiederholt mit der Abänderung, daß statt den Mischungen aus Beispiel 2 die Mischungen aus Vergleichsversuch 1 verwendet wurden. Tabelle 5 gibt die Dünnschichttopfzeiten an.

Tabelle 5

| Ansatz | Dünnschichttopfzeit in Minuten |
|---|---|
| 40/1 | 50 |
| 60/1 | 130 |

Wie der Vergleich von Tabelle 4 und 5 zeigt, haben die Mischungen mit Dehydrolinalool in gleichen molaren Verhältnissen zu Platin eine um den Faktor 1.5 - 2 höhere Dünnschichttopfzeit als mit 3,5-Dimethyl-1-hexin-3-ol.

Vergleichsversuch 4:

Vergleichsversuch zu Beispiel 2 mit Mischungen aus Vergleichsversuch 2:

Die Arbeitsweise von Beispiel 2 wurde wiederholt mit der Abänderung, daß statt den Mischungen aus Beispiel 2 die Mischungen aus Vergleichsversuch 2 verwendet wurden. Tabelle 6 gibt die Dünnschichttopfzeiten an.

Tabelle 6

| Ansatz | Dünnschichttopfzeit in Minuten |
|---|---|
| 40/1 | 21 |
| 60/1 | 53 |

Bezüglich der Dünnschichttopfzeit zeigt 3,5-Dimethyl-3-hexen-1-in einen, den Faktor 4-5, geringeren inhibierenden Effekt als Dehydrolinalool.

Beispiel 3:

Reaktionsgeschwindigkeiten der in Beispiel 1 beschriebenen Mischungen mit Inhibitor/Platin-Verhältnissen von 40 und 60 zu 1 bei 120 °C:

Dazu wurden beide Mischungen jeweils mit einem Glasstab in einer Schichtdicke von ca. 3 - 5 µm auf ein Polyethylen beschichtetes Papier der Fa. PWA - Raubling aufgetragen und bei 120 °C neun Sekunden vulkanisiert. Das siliconisierte Substrat wurde daraufhin mit dem Acrylatkleber A 7475 der Fa. Beiersdorf beklebt und bei 70 °C 20 Stunden temperiert. Die Trennkraft wurde bei 300 mm/min Abzugsgeschwindigkeit mit einem Gerät der Fa. Roell - Korthaus bestimmt. Die Ergebnisse sind in Tabelle 7 zusammengefaßt.

Tabelle 7

| Ansatz | Trennkraft in cN/cm |
|---|---|
| 40/1 | 6,5 |
| 60/1 | 7,0 |

Vergleichsversuch 5:

Vergleichsversuch zu Beispiel 3 mit Mischungen aus Vergleichsversuch 1:

Die Arbeitsweise von Beispiel 3 wurde wiederholt mit der Abänderung, daß statt den Mischungen aus Beispiel 3 die Mischungen aus Vergleichsversuch 1 verwendet wurden. Tabelle 8 gibt die Trennkräfte an.

Tabelle 8

| Ansatz | Trennkraft in cN/cm |
|---|---|
| 40/1 | 6,4 |
| 60/1 | 7,2 |

Vergleichsversuch 6:

Vergleichsversuch zu Beispiel 3 mit Mischungen aus Vergleichsversuch 2:

Die Arbeitsweise von Beispiel 3 wurde wiederholt mit der Abänderung, daß statt den Mischungen aus Beispiel 3 die Mischungen aus Vergleichsversuch 2 verwendet wurden. Tabelle 9 gibt die Trennkräfte an.

Tabelle 9

| Ansatz | Trennkraft in cN/cm |
|---|---|
| 40/1 | 7,0 |
| 60/1 | 8,9 |

Eine Zusammenfassung der Ergebnisse aus den Beispielen 1 bis 3 und den Vergleichsversuchen 1 bis 6 ergibt, daß mit Dehydrolinalool als erfindungsgemäßem Inhibitor im Gegensatz zu 3,5-Dimethyl-1-hexin-3-ol und 3,5-Dimethyl-3-hexen-1-in als Inhibitoren gemäß dem Stand der Technik bei jeweils gleichen molaren Verhältnissen zu elementarem Platin bessere Gel- und Dünnschichttopfzeiten bei gleichen Vulkanisationsgeschwindigkeiten der additionsvernetzenden Organopolysiloxanmassen erhalten werden.

**Patentansprüche**

**1.** Vernetzbare Zusammensetzungen enthaltend

(1) Organosiliciumverbindungen, die Reste mit aliphatischen Kohlenstoff-Kohlenstoff-Mehrfachbindungen aufweisen,
(2) Organosiliciumverbindungen mit Si-gebundenen Wasserstoffatomen oder anstelle von (1) und (2)
(3) Organosiliciumverbindungen, die Reste mit aliphatischen Kohlenstoff-Kohlenstoff-Mehrtachbindungen und Si-gebundene Wasserstoffatome aufweisen,
(4) die Anlagerung von Si-gebundenen Wasserstoff an aliphatische Mehrfachbindung fördernde Katalysatoren und
(5) die Anlagerung von Si-gebundenem Wasserstoff an aliphatische Mehrfachbindung bei Raumtemperatur verzögernde Mittel der allgemeinen Formel

$$R^1-C\equiv C-\underset{X}{\overset{R^2}{C}}-(R^3)_x-(\overset{R^4}{C}=\overset{R^5}{C})_y-(R^3)_x-(\overset{R^4}{C}=\overset{R^5}{C})_y-(R^3)_x-(\overset{R^4}{C}=\overset{R^5}{C})_y-R^6 \quad (I)$$

wobei

$R^1$, $R^2$, $R^4$, $R^5$ und $R^6$ gleich oder verschieden sind, ein Wasserstoffatom oder einen einwertigen, gegebenenfalls substituierten Kohlenwasserstoffrest mit 1 bis 12 Kohlenstoffatomen je Rest bedeutet,
$R^3$ einen zweiwertigen Kohlenwasserstoffrest mit 1 bis 6 Kohlenstoffatomen je Rest bedeutet,
X einen Rest der Formel -OH, -Cl, Br und -CN bedeutet und

x und y gleich oder verschieden sind und 0 oder 1 bedeutet, mit der Maßgabe, daß mindestens eine Doppelbindung vorliegt.

2. Vernetzbare Zusammensetzungen nach Anspruch 1, dadurch gekennzeichnet, daß als die Anlagerung von Si-gebundenem Wasserstoff an aliphatische Mehrfachbindung bei Raumtemperatur verzögernde Mittel (5) solche der Formel

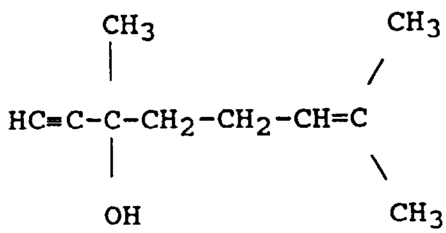

verwendet werden.

3. Verfahren zur Herstellung von klebrige Stoffe abweisenden Überzügen durch Auftragen von vernetzbaren Zusammensetzungen gemäß Anspruch 1 auf die klebrige Stoffe abweisend zu machenden Oberflächen und anschließende Härtung der Zusammensetzungen.

4. Verfahren nach Anspruch 3, dadurch gekennzeichnet, daß als die Anlagerung von Si-gebundenem Wasserstoff an aliphatische Mehrfachbindung bei Raumtemperatur verzögernde Mittel (5) solche der Formel

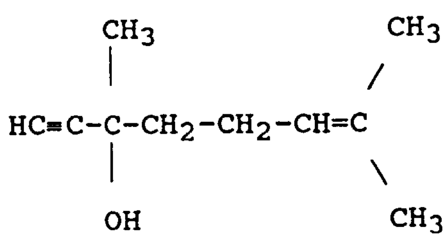

verwendet werden.

## Claims

1. Crosslinkable compositions comprising

(1) organosilicon compounds which have radicals containing aliphatic carbon-carbon multiple bonds,
(2) organosilicon compounds having Si-bonded hydrogen atoms, or, instead of (1) and (2),
(3) organosilicon compounds containing radicals with aliphatic carbon-carbon multiple bonds and Si-bonded hydrogen atoms,
(4) catalysts which promote the addition of Si-bonded hydrogen onto aliphatic multiple bond, and
(5) agents which retard the addition of Si-bonded hydrogen onto aliphatic multiple bond at room temperature, of the general formula

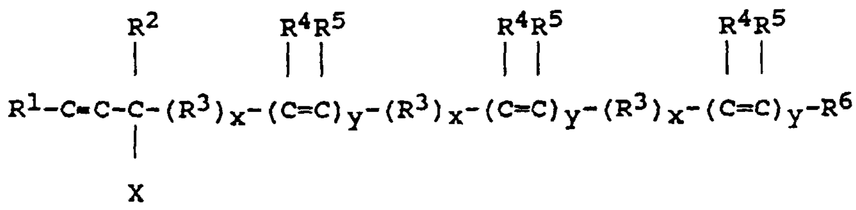 (I)

in which

$R^1$, $R^2$, $R^4$, $R^5$ and $R^6$ are identical or different and are a hydrogen atom or a monovalent, substituted or unsubstituted hydrocarbon radical having 1 to 12 carbon atoms per radical,
$R^3$ is a divalent hydrocarbon radical having 1 to 6 carbon atoms per radical,
X is a radical of the formula -OH, -Cl, Br and -CN, and
x and y are identical or different and are 0 or 1, with the proviso that there is at least one double bond.

2. Crosslinkable compositions according to Claim 1, characterized in that the agents (5) used which retard the addition of Si-bonded hydrogen onto aliphatic multiple bond at room temperature are those of the formula

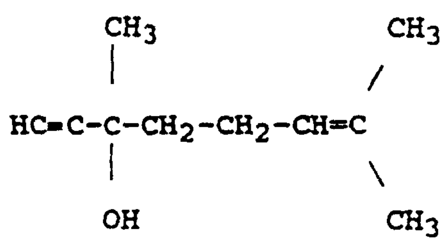

3. Process for the preparation of coatings which repel tacky substances, by applying crosslinkable compositions according to Claim 1 to the surfaces to be made repellent to tacky substances, and then curing the compositions.

4. Process according to Claim 3, characterized in that the agents (5) used which retard the addition of Si-bonded hydrogen onto aliphatic multiple bond at room temperature are those of the formula

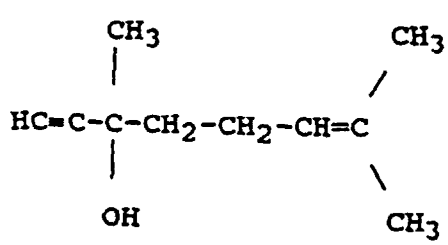

**Revendications**

1. Compositions réticulables contenant :

(1) des composés organosiliciques qui présentent des radicaux avec des liaisons multiples carbone-carbone aliphatiques,
(2) des composés organosiliciques avec des atomes d'hydrogène liés à Si ou, à la place de (1) et (2)
(3) des composés organosiliciques qui présentent des radicaux avec des liaisons multiples carbone-carbone aliphatiques et des atomes d'hydrogène liés à Si,
(4) des catalyseurs activant l'addition d'hydrogène lié à Si sur une liaison multiple aliphatique, et
(5) des agents ralentissant l'addition d'hydrogène lié à Si sur une liaison multiple aliphatique à température ambiante, de formule générale :

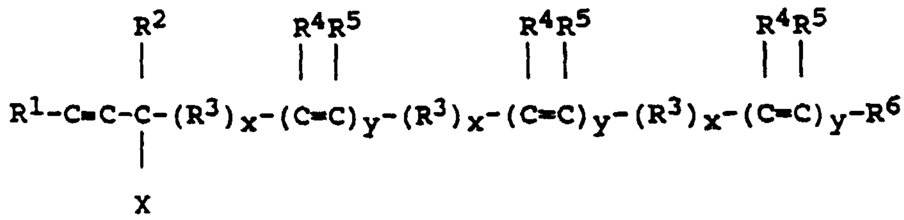 (I)

où

R[1], R[2], R[4], R[5] et R[6] sont identiques ou différents, représentent un atome d'hydrogène ou un radical hydrocarbure monovalent facultativement substitué avec 1 à 12 atomes de carbone par radical,
R[3] représente un radical hydrocarbure bivalent avec 1 à 6 atomes de carbone par radical,
X représente un radical de formule -OH, -Cl, -Br et -CN, et
x et y sont identiques ou différents et représentent 0 ou 1,

avec la condition qu'au moins une double liaison est présente.

**2.** Compositions réticulables suivant la revendication 1, caractérisées en ce que l'on utilise comme agent (5) ralentissant l'addition d'hydrogène lié à Si sur une liaison multiple aliphatique à température ambiante, ceux de formule :

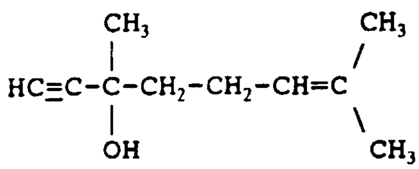

**3.** Procédé de préparation de revêtements antiadhésifs par application des compositions réticulables suivant la revendication 1 sur les surfaces à rendre antiadhésives et ensuite, par durcissement des compositions.

**4.** Procédé suivant la revendication 3, caractérisé en ce que l'on utilise comme agent (5) ralentissant l'addition d'hydrogène lié à Si sur une liaison multiple aliphatique à température ambiante, ceux de formule :